(19) Europäisches Patentamt / European Patent Office / Office européen des brevets

(11) **EP 1 990 757 A1**

(12) **DEMANDE DE BREVET EUROPEEN**

(43) Date de publication:
**12.11.2008 Bulletin 2008/46**

(51) Int Cl.:
*G06K 9/00* *(2006.01)*     *G06K 9/62* *(2006.01)*

(21) Numéro de dépôt: **07301034.0**

(22) Date de dépôt: **11.05.2007**

(84) Etats contractants désignés:
**AT BE BG CH CY CZ DE DK EE ES FI FR GB GR HU IE IS IT LI LT LU LV MC MT NL PL PT RO SE SI SK TR**
Etats d'extension désignés:
**AL BA HR MK RS**

(71) Demandeur: **GEMPLUS**
**13420 Gémenos (FR)**

(72) Inventeur: **Barral, Claude**
**13119 St SAVOURNIN (FR)**

(54) **Procédé et dispositif d'authentification automatisée d'un ensemble de points**

(57)     La présente invention décrit un procédé et un dispositif automatisé d'authentification d'un ensemble de points de candidats vis à vis d'un ensemble de points de référence.

La présente invention à comme particularité d'être quasiment insensible aux inévitables translations, rotations et homothéties qui surviennent lors de captures, par exemple d'empreintes digitales, successives mais indépendantes.

Fig. 5

EP 1 990 757 A1

**Description**

L'invention concerne, de façon générale, les techniques liées à l'authentification automatisée d'un ensemble de points caractéristiques, avec un très haut degré de fiabilité.

Plus précisément, l'invention concerne, selon un premier aspect, un procédé d'authentification mettant en oeuvre un nuage de points, comprenant au moins l'opération consistant à identifier, dans ce nuage de points, un ensemble de points caractéristiques que nous appellerons par la suite minuties, en nombre supérieur à 3.

L'authentification d'un ensemble de points par rapport à un autre est indispensable dans bon nombre de domaines. Parmi lesquels nous trouvons :

- la biométrie. L'utilisation d'empreintes biométriques, telles que les empreintes digitales, pour identifier une personne et authentifier par exemple les documents présentés par elle, présente une efficacité très largement reconnue et qui n'est donc plus à démontrer aujourd'hui.
- l'astronomie. En effet une reconnaissance des corps célestes permet de se positionner sur le globe, ainsi que de s'orienter.

En revanche, la mise en oeuvre pratique ces techniques, et notamment l'automatisation de la reconnaissance, se heurte à plusieurs difficultés, qui ne peuvent aujourd'hui être contournées que par le recours à de puissants calculateurs.

En particulier, la représentation d'un nuage de points, selon les techniques actuelles est sensible à diverses transformations et notamment les translations, les rotations et les homothéties.

Ces transformations viennent des changements de la position du moyen de capture (lecteur d'empreinte digitale, appareil photographique, caméra ...) lors de la saisie. En effet, deux captures consécutives ne seront jamais identiques car l'appareil de capture ne sera jamais parfaitement au même endroit, le sujet ou la cible de la capture ne sera jamais exactement au même endroit non plus, à cela il faut rajouter les paramètres environnementaux qui peuvent altérer la capture.

Ces perturbations provoquent des transformations parasites, essentiellement des translations et des rotations.

A cela il faut rajouter que des variations de la distance entre la cible de la capture et le moyen de capture provoque des transformations parasites, essentiellement des homothéties.

De plus, le repérage des points caractéristiques d'un nuage de points, dans les solutions connues de l'état de l'art, nécessitent un positionnement du nuage de points dans un repère orthonormé. Cette opération nécessite de nombreux calculs, entre autre destinés à centrer ce repère orthonormé sur le nuage de points en question.

Dans ce contexte, la présente invention a pour but de proposer un procédé d'authentification ne nécessitant pas le repérage du nuage de points dans un repère orthonormé, et dans lequel la représentation du nuage de points est insensible à l'une au moins de ces transformations, de manière à pouvoir être mis en oeuvre sur des calculateurs peu puissants.

Ces méthodes d'authentification sont basées sur une comparaison d'un candidat à une référence.

La première étape sera donc toujours une étape dite d'enrôlement, et consistant en un enregistrement de la valeur qui servira de référence par la suite. Cette étape particulière doit se faire, dans la mesure du possible, dans de bonnes conditions de sécurité de façon à pouvoir, par la suite, avoir confiance en cette valeur.

L'enrôlement se divise en

- Au moins une étape de capture
- Au moins une étape d'extraction
- Au moins une étape de traitement
- Au moins une étape de stockage (généralement en mémoire non volatile)

La deuxième étape est l'étape d'authentification à proprement parler. Cette étape consiste en une comparaison d'une valeur candidate et de la valeur de référence enregistrée lors de l'enrôlement.

L'authentification se divise en :

- Au moins une étape de capture
- Au moins une étape d'extraction
- Au moins une étape de traitement
- Au moins une étape de stockage (généralement en mémoire volatile)
- Au moins une étape de comparaison (généralement appelée MATCH pour la traduction anglaise du mot)
- Au moins une restitution du résultat

Le procédé d'authentification selon l'invention propose une solution permettant d'automatiser et d'embarquer les étapes de traitement et de comparaison dans des dispositifs ne possédant pas de grandes ressources, tant en mémoire qu'en puissance de calcul.

A cette fin, le procédé d'authentification de l'invention, par ailleurs conforme à la définition générique qu'en donne le préambule ci-dessus, est essentiellement caractérisé en ce qu'il comprend en outre les opérations consistant à :

- regrouper des minuties par trois de manière à former des triangles non plats dont chacun a pour sommets trois points de la distribution. Nous appellerons « triangle non plat » un triangle dont les trois sommets ne sont pas alignés.

- associer à chaque triangle sélectionné une information sur le diamètre du cercle circonscrit, et stocker cette information ;

- définir, pour chaque triangle sélectionné, deux informations respectivement représentatives de deux rapports impliquant les trois angles du triangle, pris deux à deux.

En pratique, le nuage de points peut être représenté par la liste des triplets formés des trois informations obtenues lors des deux étapes précédentes, pour chaque triangle sélectionné.

Dans un cas particulièrement avantageux, les triangles non plats sont sélectionnés selon la méthode de triangulation de Delaunay.

Un dispositif selon la présente invention comporte, en outre :

- des moyens de reconnaissance automatique pour identifier, dans l'image bidimensionnelle, une distribution bidimensionnelle de points dont chacun correspond à l'emplacement d'un point caractéristique du nuage de points;
- des moyens de calcul programmés :

   - pour sélectionner, dans cette distribution de points caractéristiques, une pluralité de triangles non plats, dont chacun a pour sommets trois points de la distribution,
   - pour associer à chaque triangle sélectionné une information sur le diamètre du cercle circonscrit, et stocker celle-ci
   - définir, pour chaque triangle ABC sélectionné, deux informations respectivement représentatives de deux rapports impliquant les trois angles du triangle, pris deux à deux, et
   - une mémoire non volatile pour stocker, en tant que représentation de ladite empreinte, une liste des triplets formés des trois informations obtenues lors des deux étapes précédentes, pour chaque triangle sélectionné.

De préférence, le dispositif disposera aussi d'une mémoire volatile permettant de stocker temporairement les triplets ou les listes de triplets, pendant les différents calculs.

De préférence, les moyens de calcul programmés sont en outre programmés :

- pour comparer l'ensemble des triplets issus d'un nuage de points candidat (NPC), à l'ensemble des triplets issus d'un nuage de points de référence (NPR) préalablement stockés dans la mémoire non volatile,
- pour dénombrer les triplets du nuage de points candidat dont les valeurs varient, avec un des triplets de l'empreinte de référence, dans des proportions inférieures à des seuils prédéfinis.
  En effet, un triplet de NPC (Angle1-NPC, Angle2-NPC, Diam-NPC), ne sera retenu que s'il existe un triplet de NPR (Angle1-NPR, Angle2-NPR, Diam-NPR), pour lequel :

     Angle1-NPC et Angle1-NPR varient dans des proportions inférieures à un seuil S1
     Angle2-NPC et Angle2-NPR varient dans des proportions inférieures à un seuil S2
     Diam-NPC et Diam-NPR varient dans des proportions inférieures à un seuil S3

- pour assimiler, ou non, le nuage de points candidat au nuage de points de référence, selon que le nombre de triplets précédemment dénombrés de NPC, rapporté au premier nombre de triplets, représente, ou non, une proportion au moins égale à un seuil Seuil-Acceptation déterminé.

D'autres caractéristiques et avantages de l'invention ressortiront clairement de la description qui en est faite ci-après, à titre indicatif et nullement limitatif, en référence aux dessins dans lesquels :

- la figure 1 représente un ensemble de points caractéristiques (minuties) issu d'un nuage de points non représenté ;

- la figure 2 représente un exemple de réseau de triangles non plats, selon l'invention appliquée aux minuties de la figure 1 ;

- la figure 3 met en évidence trois triangles sur l'ensemble de ceux de la figure 2 ;

- la figure 4 représente les triangles mis en évidence dans la figure 4, avec leurs cercles circonscrits respectifs ;

- la figure 5 réduit le nuage de points dont sont issues les minuties représentées sur la figure 1, aux trois triangles mis en évidence dans la figure 3, et à leur cercles circonscrits tracés dans la figure 4 ;

- la figure 6 représente une vue agrandie d'une empreinte digitale ;

- la figure 7 représente les minuties issues de l'empreinte digitale de la figure 6, ces minuties étant reliées entre elles de manière à former des triangles non plats, et chacun de ces triangles ayant son cercle circonscrit tracé ;

- la figure 8 montre la liste de triplets, issus des données triangles et des cercles de la figure 7. Cette liste de triplets forme une signature de l'empreinte digitale de la figure 6.

Comme indiqué précédemment, l'invention concerne un procédé d'authentification mettant en oeuvre un nuage de points.

De façon connue, un procédé d'authentification de ce type comprend, dans sa phase d'acquisition, une opération d'identification, consistant à identifier, dans le nuage de points à acquérir, un ensemble de points caractéristiques (appelés minuties dans le présent document), en général en nombre de l'ordre de quelques dizaines.

Selon l'invention, cette phase d'acquisition, qui conduit à l'obtention d'une représentation du nuage de points, comprend en outre des opérations d'assimilation, de sélection, d'association, de définition, et de représentation.

L'opération d'assimilation consiste à assimiler l'ensemble de minuties précédemment identifiées dans l'empreinte à une distribution bidimensionnelle de points tels que A à K.

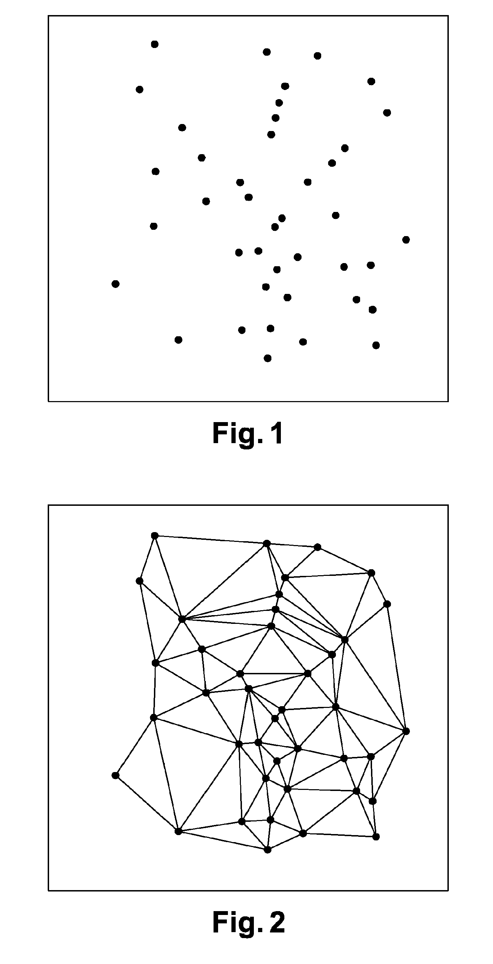

La figure 1 illustre l'assimilation de l'ensemble des points caractéristiques issus d'un nuage de points, à un une représentation bidimensionnelle de ces minuties.

Dans l'art antérieur, dans une empreinte digitale, les minuties sont classiquement constituées par des croisements de lignes.

De même, dans un autre domaine qui est celui de l'analyse des astres, les corps les plus brillants sont souvent utilisés comme points caractéristiques d'une portion du ciel. Dans un graphique quelconque les points caractéristiques seront des points généralement isolés, afin de ne pas les confondre avec leurs voisins. Certains groupes de points peuvent être choisis en raison d'un agencement particulièrement identifiable.

Toutes ces méthodes de sélection des points nécessitaient que le nuage de points soit suffisamment fourni afin que le nombre de points caractéristiques soit suffisant.

Selon l'invention, n'importe quels points peuvent devenir des points caractéristiques, car le « choix » des points répondants à des critères de qualité, est remplacé par le choix des triangles permettant les calculs. Ainsi, il est possible de traiter des nuages de points beaucoup plus réduits que dans l'art antérieur, en adaptant les méthodes de choix des triangles.

L'opération de sélection consiste à sélectionner, dans cette distribution de points, une pluralité de triangles non plats dont chacun a pour sommets trois points de la distribution bidimensionnelle de points.

La technique de triangulation de Delaunay donne de très bons résultats, mais de très nombreuses autres méthodes peuvent être mises en oeuvre, pour peu qu'elles excluent les triangles plats.

Dans le cas où le nombre de minutie est très important, une méthode peut consister en un refus de tout triangle partageant un sommet avec un triangle déjà enregistré, et des triangles plats.

Une autre méthode peut consister en une exclusion des triangles plats, et des triangles inscrits partiellement ou dans leur intégralité, dans des triangles déjà enregistrés.

Une autre méthode peut consister en une exclusion des triangles plats et des triangles contenant des minuties en plus de leurs trois sommets.

Dans le cas ou le nombre de minuties est au contraire très réduit la sélection peut par exemple se faire en excluant uniquement les triangles plats.

Plusieurs critères éventuellement cumulatifs peuvent être adoptés pour optimiser cette opération de sélection.

La figure 2 illustre la sélection de triangles issus des points de la figure 1, selon la méthode de Delaunay.

L'opération d'association consiste à associer à chaque triangle sélectionné une information DIAM sur le diamètre du cercle circonscrit.

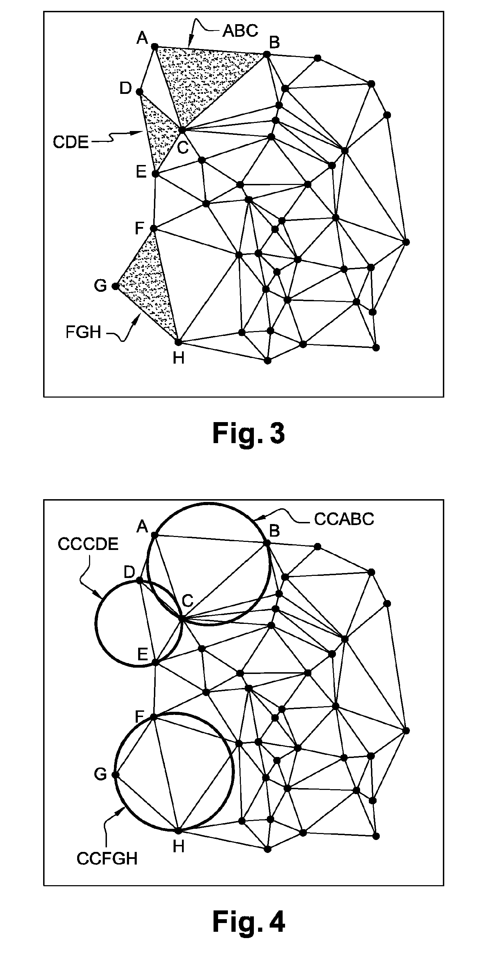

La figure 4 illustre l'association, à trois triangles particuliers identifiés dans la figure 3 de leurs cercles circonscrits respectifs. Ainsi cette opération peut associer au triangle ABC, le carré du diamètre du cercle circonscrit CCABC, au triangle CDE, le carré du diamètre du cercle circonscrit CCCDE, au triangle FGH, le carré du diamètre du cercle circonscrit CCFGH.

L'opération de définition consiste à définir, pour chaque triangle ABC sélectionné, deux informations (Angle1 et Angle2) respectivement représentatives de deux rapports impliquant les trois angles du triangle, pris deux à deux. Dans un mode préféré de réalisation, cette étape consistera à définir, pour chaque triangle ABC sélectionné, un sommet A qui servira de repère, et stocker les angles Angle1 = TétaA - TétaB ainsi que Angle2 = TétaA - TétaC.

Sachant que :

- TétaA est l'angle interne au triangle, formé en A par l'intersection des segments [BA] et [CA]
- TétaB est l'angle interne au triangle, formé en B par l'intersection des segments [AB] et [CB]
- TétaC est l'angle interne au triangle, formé en C par l'intersection des segments [BC] et [AC]

Un mode de réalisation particulier de l'invention consiste en son application au monde de la biométrie. En effet, le domaine de la biométrie a particulièrement besoin de moyens rapides et simples pour authentifier une personne avec un haut niveau de fiabilité.

Une authentification basée sur de la biométrie débute par une étape de capture, et une étape d'extraction.

La capture est l'étape qui consiste en un relevé de la donnée biométrique à un moment donné. Dans le cas de la majeure partie des biométries, cette étape se fait par la capture d'une image, c'est le cas, entre autre, pour les empreintes digitales, la reconnaissance faciale, rétinienne, d'iris, et de bien d'autres.

Toutefois, cette capture peut prendre des formes très variées, par exemple un enregistrement pour de la reconnaissance vocale, un enregistrement vidéo pour de la reconnaissance de démarche, un enregistrement combiné de mouvement et de pression pour de la reconnaissance d'empreintes digitales.

Une fois cette capture réalisée, l'étape d'extraction permet d'isoler des points caractéristiques dans cette capture. Dans le cas d'une empreinte digitale, ces points caractéristiques sont entre autre des croisements de lignes, des fins de lignes, ou des îlots dans une ligne.

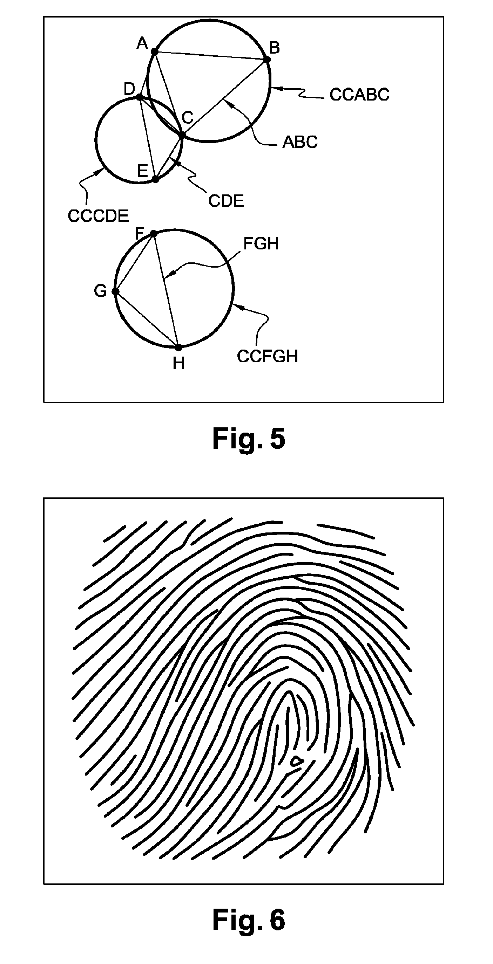

Le résultat de l'étape d'extraction, appliquée sur la capture d'empreinte digitale de la figure 6, donne un ensemble de points comparable à celui de la figure 1.

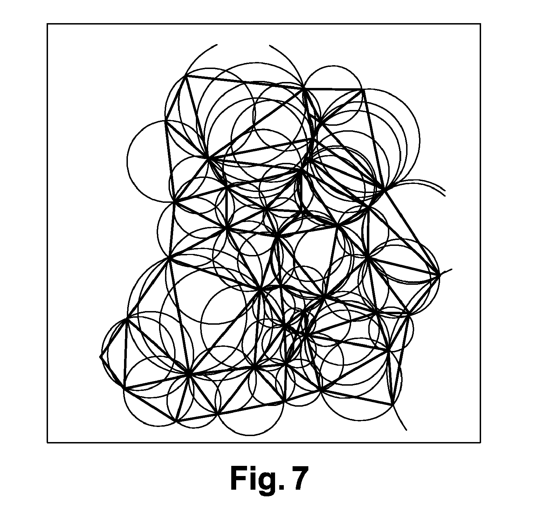

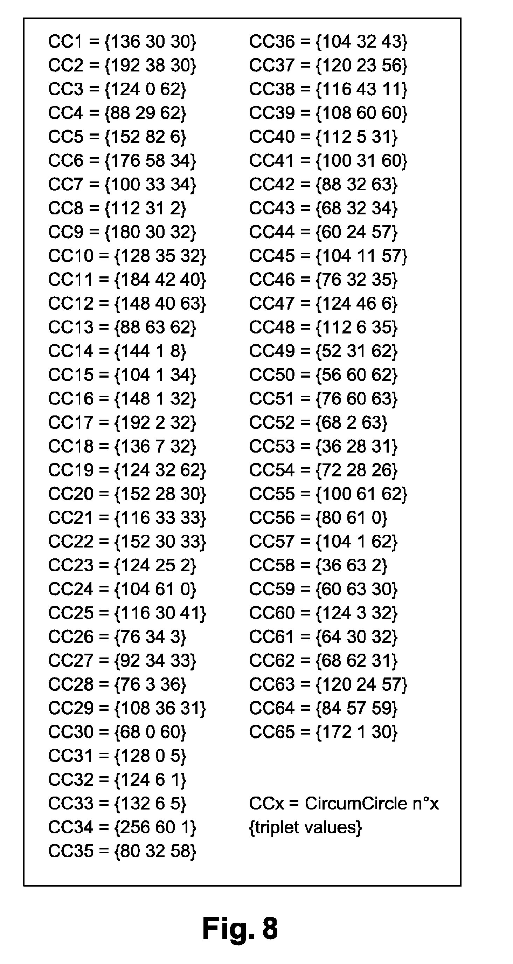

Après avoir sélectionné des triangles reliant ces points, et calculé leurs cercles circonscrits respectifs, on obtient un schéma comparable à celui représenté par la figure 7. en stockant un triplet par triangle ABC, et chaque triplet contenant une information sur le diamètre du cercle (ici la racine carré), et aussi les angles Angle1 = TétaA - TétaB ainsi que Angle2 = TétaA - TétaC, on peut représenter l'empreinte digitale de la figure 6 par la liste de triplets de la figure 8. Cette étape est par exemple l'étape d'enrôlement, et la liste de triplets obtenue peut être stockée dans une carte à puce.

$$\{102;27;94\}\{152;13;79\}$$

$$\{81;84;29\} \quad \{192;53;13\}$$

$$\{141;63;66\}\{458;36;27\}$$

$$\{391;28;48\}\{73;21;89\}$$

$$\{423;7;13\} \quad \{180;45;75\}$$

Lors de l'authentification, l'utilisateur va soumettre son doigt à une capture, via un lecteur d'empreintes digitales. Cette nouvelle empreinte, appelée empreinte candidate, sera par exemple envoyée à une unité de calcul portable, et traitée comme précédemment décrit afin de la représenter par une suite de triplets.

$$\{143;62;68\}\{155;17;76\}$$

$$\{102;15;6\}\quad\{210;54;88\}$$

$$\{19;91;42\}\quad\{70;23;86\}$$

$$\{85;82;27\}\quad\{28;85;95\}$$

$$\{181;29;85\}\{394;27;50\}$$

$$\{327;16;33\}\{192;55;14\}$$

L'ensemble de points caractéristiques qui a permit d'obtenir cette liste de triplets aurait peut venir, non pas de l'empreinte digitale directement, mais d'une représentation de celle-ci faite sous une forme quelconque, a condition q'il soit possible à l'unité de calcul portable d'une faire une représentation bidimensionnelle, afin de pouvoir calculer les triplets.

Nous noterons que le nombre de triplets est dépendant du nombre de triangles sélectionnés lors de l'étape de sélection. Ainsi, il sera rare que deux captures aient exactement le même nombre de triplets.
Une fois cette liste de triplets dits triplets candidats, obtenue, cette liste va être stockée en mémoire volatile de l'unité de calcul portable.

Le système d'authentification est, par exemple, réglé comme suit :

Seuil-acceptation = 60% : 60% des triplets de l'empreinte de référence doivent être retrouvés dans l'empreinte candidate.

S1 = 5 : les valeurs "Angle1" des deux triplets comparés doivent varier de moins de 5.
S2 = 5 : les valeurs "Angle2" des deux triplets comparés doivent varier de moins de 5.
S3 = 7 : les valeurs "DIAM" des deux triplets comparés doivent varier de moins de 7.

L'unité de calcul portable va demander à la carte de lui envoyer les triplets de référence, et va commencer à les comparer avec ceux de l'empreinte candidate :

Dès lors, la comparaison proprement dite peut commencer.
En comparant les triplets {102 ; 27 ; 94} et {143 ; 62 ; 68} , 102 et 143 varient de plus 7 (valeur de S3). Le triplet {102 ; 27 ; 94} n'est donc pas retenu comme « similaire » au triplet {143 ; 62 ; 68}, l'analyse continue.

Après de nombreuses comparaisons, l'unité de calcul portable va comparer les triplets {81 ; 84 ; 29} et {85 ; 82 ; 27} :

81 et 85 varient de 4, ce qui est bien inférieur ou égal à S3
84 et 82 varient de 2, ce qui est bien inférieur ou égal à S2
29 et 27 varient de 2, ce qui est bien inférieur ou égal à S1

Donc ces deux triplets varient dans des proportions inférieures ou égales aux seuils S1 S2 S3 prédéfinis.
Donc ce triplet candidat ne fera plus partie de la suite de l'analyse, et le compteur de similitude est incrémenté de 1.

La suite de l'analyse est représentée par le schéma suivant :

{143;62;68}

{102;27;94}
*{81;84;29}*
*{141;63;66}*

{102;15;6}
{19;91;42}
{85;82;27}

*{391;28;48}*
{423;7;13}
*{152;13;79}*
*{192;53;13}*
{458;36;27}
*{73;21;89}*
*{180;45;75}*

{181;29;85}
{327;16;33}
{155;17;76}
{210;54;88}
{70;23;86}
{28;85;95}
{394;27;50}
{192;55;14}

Au final, le compteur contient la valeur sept, pour une empreinte de référence composée de 10 triplets, soit 70% de l'empreinte de référence a été retrouvé dans l'empreinte candidate. Ce seuil est supérieur à la valeur Seuil-acceptation fixée à 60%.

L'empreinte candidate est donc authentifiée comme appartenant au porteur de la carte.

Un autre mode de réalisation particulier de l'invention consiste en son application au monde de l'astronomie. En effet, l'invention, une fois embarquée à bord d'un téléphone portable muni d'un appareil photographique, permettra, par exemple l'application suivante.

Il est aisé de traiter selon l'invention, tout ou partie de la carte des astres visibles de nuit, depuis un territoire particulier, ou une zone du globe plus vaste. Une fois ces informations converties en une liste de triplets, cette carte peut être considérée comme donnée de référence.

Dès lors, il est possible à l'utilisateur de prendre en photo les astres qu'il voit. L'application traiterait cette donnée pour obtenir une série de triplets considérés comme candidats.

L'application chercherait alors à authentifier la partie du ciel de la carte générale de référence à laquelle correspond la portion « candidate ». Cela permettrait par exemple d'identifier l'endroit d'où la photo a été prise, dans le cas ou l'utilisateur est perdu. Une autre utilisation peut être d'identifier les astres ou regroupements d'astres (constellations, ...) que l'utilisateur a en face de lui, si ces données ont été ajoutées à la carte générale de référence.

Ces modes de réalisations doivent être compris comme des exemples d'application, en aucun cas limitatifs, de la présente invention. Le présent document couvre toute utilisation de la présente invention dans tous domaines où serait réalisée une comparaison de points caractéristiques avec des points de référence.

Nous noterons que la présente invention peut être utilisé dans un mode partiel afin de stocker des ensembles de points sous forme de triplets.

Une utilisation particulière de l'invention consiste en son application à des nuages de points déjà stockés sous une forme autre que celle selon l'invention. Dans ce cas, l'invention va convertir le nuage de points sous forme de triplets.

La solution selon l'invention permet d'améliorer très grandement les performances de l'étape de comparaison (match en anglais) par rapport aux solutions connues dans l'état de l'art et de la technique.

La présente invention permet aussi de faire de l'authentification avec des ensembles de points caractéristiques moins fournis que dans l'art antérieur. En effet, le fait que la présente invention utilise des triangles issus des points caractéristiques, et non les points caractéristiques directement, permet, en choisissant avec soin la méthode de sélection des triangles, d'obtenir un nombre de triangles bien plus élevé que le nombre de points. Cette caractéristique permet à la présente invention, d'authentifier des ensembles de points jusqu'alors impossibles à authentifier par le fait de leur faible nombre de points caractéristiques.

# EP 1 990 757 A1

**Revendications**

1. Procédé d'authentification mettant en oeuvre un nuage de points, et un ensemble de points caractéristiques dudit nuage de points, lesdits points caractéristiques étant appelés minuties, comprenant au moins l'opération d'extraction consistant à extraire de cet ensemble de points caractéristiques une signature, **caractérisé en ce que** ladite opération d'extraction comprend en outre les opérations consistant à :

   - regrouper des minuties par 3 de manière à former des triangles non plats (ABC, CDE, etc.) dont chacun a pour sommets 3 points (A, B, C) de la distribution;
   - associer à chaque triangle sélectionné une information DIAM sur le diamètre du cercle circonscrit;
   - définir, pour chaque triangle ABC sélectionné, deux informations, Angle1 et Angle2, respectivement représentatives de deux rapports impliquant les trois angles dudit triangle, pris deux à deux.

2. Procédé suivant la revendication 1, **caractérisé en ce que** ledit ensemble de points caractéristiques est représenté par la liste des triplets formés de Diam, Angle1, Angle2, pour chaque triangle sélectionné.

3. Procédé suivant la revendication 1 ou 2, **caractérisé en ce que** les triangles non plats ABC sont sélectionnés selon la méthode de triangulation de Delaunay.

4. Procédé selon l'une quelconque des revendications 2 à 3 **caractérisé en ce que** lesdits triplets obtenus sont stockés dans une mémoire (M).

5. Procédé selon l'une des revendications 1 à 4, **caractérisé en ce qu'**il comprend en outre une étape de comparaison d'un ensemble de points caractéristiques candidat (EB'), avec un ensemble de points caractéristiques de référence (EB), ladite étape de comparaison comprend au moins
   une étape de dénombrement, consistant à compter les triplets dudit ensemble de points caractéristiques candidat (EB') dont les valeurs (Angle1, Angle2 et Diam) varient, avec un des triplets dudit ensemble de points caractéristiques de référence (EB), dans des proportions inférieures à des seuils (S1 S2 et S3) prédéfinis
   une étape de validation consistant à vérifier que le nombre obtenu par l'étape de dénombrement franchit un seuil (S4) prédéfini.

6. Procédé suivant l'une des revendications 1 à 5,
   **caractérisé en ce que** chaque ensemble de points caractéristiques est une empreinte biométrique.

7. Procédé suivant l'une des revendications 1 à 5,
   **caractérisé en ce que** chaque ensemble de points caractéristiques est une cartographie astronomique d'une partie du ciel.

8. Procédé suivant l'une des revendications 1 à 5,
   **caractérisé en ce que** chaque ensemble de points caractéristiques est représentatif de données comportementales d'une personne.

9. Dispositif d'authentification, comprenant au moins des moyens d'acquisition propres à former une image bidimensionnelle numérisée d'un ensemble de points caractéristiques, **caractérisé en ce qu'**il comprend en outre :

   - des moyens de reconnaissance automatique pour identifier, dans l'image bidimensionnelle, une distribution bidimensionnelle de points dont chacun correspond à l'emplacement d'une minutie;
   - des moyens de calcul programmés :

      - pour sélectionner, dans cette distribution de points, une pluralité de triangles non plats (ABC, CDE, etc.) dont chacun (ABC) a pour sommets 3 points (A, B, C) de la distribution,
      - pour associer à chaque triangle sélectionné une information DIAM sur le diamètre du cercle circonscrit
      - définir, pour chaque triangle ABC sélectionné, deux informations (Angle1 et Angle2) respectivement représentatives de deux rapports impliquant les 3 angles dudit triangle, pris deux à deux.
      - une mémoire non volatile pour stocker, en tant que représentation dudit ensemble de points caractéristiques, une liste des triplets formés au moins de Diam, Angle1, Angle2, pour chaque triangle sélectionné

10. Dispositif d'authentification suivant la revendication 9, **caractérisé en ce que** les moyens de calcul programmés sont en outre programmés :

- pour comparer l'ensemble des triplets (Diam, Angle1, Angle2), issus d'un ensemble de points caractéristiques candidat (EB') à l'ensemble des triplets issus d'un ensemble de points caractéristiques de référence (EB) préalablement stockée dans la mémoire non volatile,
- pour dénombrer les triplets de l'ensemble de points caractéristiques candidat (EB') dont les valeurs Diam Angle1, et Angle2 varient, avec un des triplets de l'empreinte de référence (EB), dans des proportions inférieures à des seuils (S1 S2 et S3)prédéfinis
- pour assimiler, ou non, ensemble de points caractéristiques candidats (EB') à l'ensemble de points caractéristiques de référence (EB), selon que le nombre de triplets précédemment dénombrés, rapporté au premier nombre de triplets, représente, ou non, une proportion au moins égale à un seuil (S4) déterminé.

**Fig. 1**

**Fig. 2**

**Fig. 3**

**Fig. 4**

**Fig. 5**

**Fig. 6**

**Fig. 7**

CC1 = {136 30 30}    CC36 = {104 32 43}
CC2 = {192 38 30}    CC37 = {120 23 56}
CC3 = {124 0 62}     CC38 = {116 43 11}
CC4 = {88 29 62}     CC39 = {108 60 60}
CC5 = {152 82 6}     CC40 = {112 5 31}
CC6 = {176 58 34}    CC41 = {100 31 60}
CC7 = {100 33 34}    CC42 = {88 32 63}
CC8 = {112 31 2}     CC43 = {68 32 34}
CC9 = {180 30 32}    CC44 = {60 24 57}
CC10 = {128 35 32}   CC45 = {104 11 57}
CC11 = {184 42 40}   CC46 = {76 32 35}
CC12 = {148 40 63}   CC47 = {124 46 6}
CC13 = {88 63 62}    CC48 = {112 6 35}
CC14 = {144 1 8}     CC49 = {52 31 62}
CC15 = {104 1 34}    CC50 = {56 60 62}
CC16 = {148 1 32}    CC51 = {76 60 63}
CC17 = {192 2 32}    CC52 = {68 2 63}
CC18 = {136 7 32}    CC53 = {36 28 31}
CC19 = {124 32 62}   CC54 = {72 28 26}
CC20 = {152 28 30}   CC55 = {100 61 62}
CC21 = {116 33 33}   CC56 = {80 61 0}
CC22 = {152 30 33}   CC57 = {104 1 62}
CC23 = {124 25 2}    CC58 = {36 63 2}
CC24 = {104 61 0}    CC59 = {60 63 30}
CC25 = {116 30 41}   CC60 = {124 3 32}
CC26 = {76 34 3}     CC61 = {64 30 32}
CC27 = {92 34 33}    CC62 = {68 62 31}
CC28 = {76 3 36}     CC63 = {120 24 57}
CC29 = {108 36 31}   CC64 = {84 57 59}
CC30 = {68 0 60}     CC65 = {172 1 30}
CC31 = {128 0 5}
CC32 = {124 6 1}
CC33 = {132 6 5}     CCx = CircumCircle n°x
CC34 = {256 60 1}    {triplet values}
CC35 = {80 32 58}

## Fig. 8

**Office européen**
**des brevets**

**RAPPORT DE RECHERCHE EUROPEENNE**

Numéro de la demande

EP 07 30 1034

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | GEPPY PARZIALE ET AL: "The Surround ImagerTM: A Multi-camera Touchless Device to Acquire 3D Rolled-Equivalent Fingerprints"<br>ADVANCES IN BIOMETRICS LECTURE NOTES IN COMPUTER SCIENCE;;LNCS, SPRINGER-VERLAG, BE,<br>vol. 3832, 2005, pages 244-250,<br>XP019026883<br>ISBN: 3-540-31111-4<br>* page 250, alinéa 1 *<br>& GIUSEPPE PARZIALE ET AL: "A Fingerprint Matching Using Minutiae Triangulation"<br>BIOMETRIC AUTHENTICATION LECTURE NOTES IN COMPUTER SCIENCE;;LNCS, SPRINGER-VERLAG, BE,<br>vol. 3072, 2004, pages 241-248,<br>XP019007742<br>ISBN: 3-540-22146-8<br>* abrégé *<br>Section 3<br>----- | 1-10 | INV.<br>G06K9/00<br>G06K9/62 |
| X | COX G S ET AL: "A survey of point pattern matching techniques and a new approach to point pattern recognition"<br>COMMUNICATIONS AND SIGNAL PROCESSING, 1992. COMSIG '92., PROCEEDINGS OF THE 1992 SOUTH AFRICAN SYMPOSIUM ON CAPE TOWN, SOUTH AFRICA 11 SEPT. 1992, NEW YORK, NY, USA,IEEE, US, 1992, pages 243-248,<br>XP010106385<br>ISBN: 0-7803-0807-7<br>Sous-sections 3.4, 3.5<br>Section 5<br>-----<br>-/-- | 1-10 | **DOMAINES TECHNIQUES RECHERCHES (IPC)**<br><br>G06K |

Le présent rapport a été établi pour toutes les revendications

| Lieu de la recherche | Date d'achèvement de la recherche | Examinateur |
|---|---|---|
| La Haye | 5 septembre 2007 | Alecu, Teodor Iulian |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons
.....................................................................................
& : membre de la même famille, document correspondant

EPO FORM 1503 03.82 (P04C02)

**Office européen des brevets**

# RAPPORT DE RECHERCHE EUROPEENNE

Numéro de la demande

EP 07 30 1034

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 2006/040564 A (SEC DEP FOR THE HOME DEPT [GB]; NEUMANN CEDRIC [GB]; PUCH-SOLIS ROBERT) 20 avril 2006 (2006-04-20) * page 18 - page 22; figure 1 * ----- | 1-10 | |
| X | B. BHANU, X. TAN: "Computational Algorithms for Fingerprint Recognition" 2004, KLUWER ACADEMIC PRESS , BOSTON, US , XP002449238 Chapter 3 * pages 41,42; figure 3.1; tableau 3.1 * ----- | 1,2,4-10 | |
| X | GERMAIN R S ET AL: "Fingerprint matching using transformation parameter clustering" IEEE COMPUTATIONAL SCIENCE & ENGINEERING, IEEE COMPUTER SOCIETY, US, octobre 1997 (1997-10), pages 42-49, XP002361694 ISSN: 1070-9924 Section "Application to fingerprint matching" ----- | 1,2,4-10 | |
| X | US 2006/104484 A1 (BOLLE RUDOLF M [US] ET AL) 18 mai 2006 (2006-05-18) * abrégé; figures 6,7 * * alinéas [0067], [0071], [0075], [0076] * ----- | 1,2,4-10 | DOMAINES TECHNIQUES RECHERCHES (IPC) |
| X | US 2005/180614 A1 (PANDIT VINAYAKA D [IN] ET AL) 18 août 2005 (2005-08-18) * abrégé * * alinéas [0027], [0030] - [0035], [0040] - [0045] * ----- | 1,2,4-10 | |
| X | EP 1 469 417 A (ACTIVCARD INC [US]) 20 octobre 2004 (2004-10-20) * alinéas [0028], [0030], [0032], [0036] * ----- | 1,2,4-10 | |

Le présent rapport a été établi pour toutes les revendications

| Lieu de la recherche | Date d'achèvement de la recherche | Examinateur |
|---|---|---|
| La Haye | 5 septembre 2007 | Alecu, Teodor Iulian |

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 07 30 1034

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

05-09-2007

| Document brevet cité au rapport de recherche | | Date de publication | Membre(s) de la famille de brevet(s) | | Date de publication |
|---|---|---|---|---|---|
| WO 2006040564 | A | 20-04-2006 | AU | 2005293380 A1 | 20-04-2006 |
| | | | CA | 2583985 A1 | 20-04-2006 |
| | | | EP | 1800240 A1 | 27-06-2007 |
| US 2006104484 | A1 | 18-05-2006 | EP | 1825418 A1 | 29-08-2007 |
| | | | WO | 2006053867 A1 | 26-05-2006 |
| US 2005180614 | A1 | 18-08-2005 | AUCUN | | |
| EP 1469417 | A | 20-10-2004 | US | 2004202355 A1 | 14-10-2004 |
| | | | US | 2007031013 A1 | 08-02-2007 |

EPO FORM P0460

Pour tout renseignement concernant cette annexe : voir Journal Officiel de l'Office européen des brevets, No.12/82